# EUROPÄISCHE PATENTANMELDUNG

(11) **EP 0 578 122 A1**
(43) Veröffentlichungstag der Anmeldung: **12.01.1994**
(21) Anmeldenummer: 93110444.2
(22) Anmeldetag: 30.06.1993
(51) Int. Cl.: B60C 27/10

(54) **Willkürlich lösbare Rückschlageinrichtung zum Aufnehmen und Sperren gespannter Rundgliederkette**

(30) Priorität: 02.07.1992 SI 9200134
(71) Anmelder: "VERIGA", PROIZVODNJA VERIG, VIJAKOV IN INDUSTRIJSKE PNEVMATIKE, D.O.O. LESCE, SI-64248 Lesce (SI)
(72) Erfinder: Raspet, Jernej, 64248 Lesce (SI)
(74) Vertreter: Patentanwälte Viering, Jentschura & Partner

(57) **Zusammenfassung**

Eine willkürlich lösbare Rückschlageinrichtung zum Aufnehmen und Sperren einer gespannten Rundgliederkette, insbesondere zum abschliessenden Verspannen einer Schneekette auf einem Fahrzeugrad, ist gemäss der Erfindung dadurch gekennzeichnet, dass die Sperrfunktion durch im allgemeinen zwei Bestandteile der Einrichtung - einen Aufnahme-/Führungs- (12') und einen Sperrteil (13-17) - direkt, ohne irgendwelche Feder, lediglich dadurch stattfindet, dass strangartige Anschlusselemente (im Falle der Schneekette zwei Enden einer seitlichen Schliesskette und zwei diagonal querende Kettenstränge), die im eingebauten Zustand auf Zug beansprucht sind, direkt an die Bestandteile der Einrichtung angeschlossen sind, die aufgrund ihrer geometrischen Merkmale (Hebelwirkung) und in sie eingeleiteter äusserer Kräfte ein entsprechendes Drehmoment zum Sperren der in die Einrichtung eingeführten Kette ausüben.

## Beschreibung

Das technische Gebiet, in welchem die vorliegende Erfindung entstand, betrifft sog. Schneeketten, d.h. aus Kettensträngen und zugeordneten Verbindungsteilen aufgebaute Kettengeflechte, die - auf einem Autoreifen angeordnet und entsprechend verspannt - als Hilfs- bzw. Zusatzeinrichtungen zur Verhinderung des Ausrutschens auf einer Fahrunterlage dienen, mit der der Autoreifen selbst nicht technisch optimal zusammenarbeitet.

Die Erfindung bezieht sich auf eine willkürlich lösbare Rückschlageinrichtung zum Aufnehmen und Sperren einer gespannten Rundgliederkette, insbesondere aber, was beim Spannen einer Schneekette der Fall ist, zum Eingliedern eines ersten, freien, zum Verspannen der Schneekette dienenden Endabschnitts bzw. Endes einer seitlichen Schliesskette in einen von dem anderen Endabschnitt dieser seitlichen Schliesskette und zwei diagonal querenden Kettensträngen der Fahrzeug-Schneekette gebildeten Ketten-Knotenpunkt, wobei die Rückschlageinrichtung aus einem Aufnahme-/Führungsteil, in welchem ein Durchgang zum Aufnehmen und zur Führung des zuziehenden Endes der seitlichen Schliesskette der Schneekette ausgebildet ist, und einem Sperrteil, der manuell lösbar ist, zusammengesetzt ist.

Die den Gegenstand der Erfindung bildende Einrichtung ist bei der Schneekette ein Hilfsmittel, durch welches das zuziehende Ende der seitlichen Schliesskette in den Kettenvereinigungsknotenpunkt, im den die auf den Autoreifen angeordnete Schneekette verspannt wird und der sich im erwähnten Zustand im Bereich des Sockels (der Seitenfläche) des Reifens in einem Abstand von der Radfelge befindet, eingeführt und dort erfasst wird. Es handelt sich um den Knotenpunkt, der bei der Schneekette ein Ende ihrer seitlichen Schliesskette und zwei diagonal querende Kettenstränge dauernd verbindet.

Es ist daher eine allgemeine Aufgabe der vorliegenden Einrichtung, das freie, zuziehende Ende der seitlichen Schliesskette aufzunehmen, es nach dem Verspannen der Schneekette im gespannten Zustand zu halten und es, wenn die Schneekette vom Reifen abzunehmen ist, zu lösen.

Der Umstand, dass bei der Schneekette drei Kettenstränge zum Knotenpunkt, in den die gegenständliche Einrichtung eingebaut ist, geführt und dort dauernd angeschlossen sind, ist jedoch kein Hindernis für die Verwendung des Gegenstands der Erfindung in irgendwelchem anderen Fall, wenn es sich um eine dauerhafte Verbindung von zwei oder sogar einem einzigen Kettenstranghandeln würde.

Die oben angegebene allgemeine Aufgabe ist im Stand der Technik auf mehrere Weisen gelöst.

Aus DE-Anmeldung P 39 06 486.7 (Franklin) ist eine Einrichtung bekannt, deren Wesen darin liegt, dass gegenüber einem drehbaren Kettenrad eines Aufnahme-Führungsteils der Einrichtung, über das eine Rundgliederkette definiert geführt wird, ein federbelasteter Hebel angeordnet ist, dessen Bestandteil eine Klinke zum Eingreifen ins Auge des gegenüber der Klinke flach liegenden Kettenglieds ist.

Ein Nachteil dieser Lösung besteht u.a. darin, dass die Klinke lediglich in jedes zweite Glied der Kette eingreifen kann, was bedeutet, wenn man bei dem sowieso stufenartigen Verspannen ausgeprägte Einschränkungen vermeiden will, dass der Schneekettenhersteller gezwungen ist, möglichst kleingliedrige Ketten zu verwenden, sowie in der eigentlichen Klinke, die an sich der schwächste Teil der Einrichtung ist - um so schwächer, je kleiner die Kettenglieder sind.

Aus dem Herstellungsprogramm der Firmen KÖNIG S.p.A. (22047 Molteno (Co), IT) und OTTINGER GmbH (7703 Rielasingen, DE) sowie dem Programm des vorliegenden Anmelders sind im wesentlichen gleichartige Einrichtungen bekannt, die gegenüber der oben erwähnten Einrichtung so weit rationalisiert sind, dass die Funktion des Kettenrades bei einem Aufnahme-/Führungsteil der Einrichtung von einer Kettenführung übernommen wird, die aus beidseitig tiefgezogenen, miteinander mittig gebundenen Gehäuseflanken gebildet ist (somit kommt kein Kettenrad als ein drehbares Element des Aufnahme-/Führungsteils der Einrichtung vor), und zum Sperren der Kette gegenüber der Kettenführung ein breitkantiges freies Ende eines ebenso federbelasteten, schwenkbar eingebauten Sperrhebels verwendet wird, das durch sein Aufliegen auf die Umfangskante der Kettenführung mit der letzteren eine Aufnahmelagerung für ein flach anliegendes Kettenglied bildet. Die Kette wird auch in diesen Fällen kontrolliert geführt.

Offensichtlich kann man auch bei diesen Lösungen lediglich nur in jedes zweites Kettenglied eingreifen.

Der Erfindung liegt der Umstand zugrunde, dass die das Geflecht bildenden Kettenstränge bei Schneeketten doch anders verwendet und beansprucht werden, als dies für Ketten als strangartige, definiert geführte und exakt mit Zugkräften beanspruchte Maschinenteile in der Theorie und in den Industrienormen vorgesehen ist. Nicht die eigentliche Zugfestigkeit der Kettenstränge (zusätzlich zu deren Kalibrierung), die gemäss der Theorie und den Normen eine Hauptangabe bei der Kettenwahl ist, sondern ihre Verschleissfestigkeit und Rostfreiheit sind zu deren Verwendung bei den Schneeketten entscheidend, wobei die Grösse des Kettenglieds, die bei den Schneeketten als eine ausdrücklich geometrische (statt festigkeitstechnische) Gegebenheit betrachtet wird, sicher nicht unbedeutend ist.

In diesem Zusammenhang ist für das Entstehen der Erfindung die Tatsache entscheidend, dass, wenn es sich bei der betreffenden Einrichtung um das Einführen und Fassen des Spannendes einer seitlichen Schliesskette einer Schneekette in dessen eingegliedertem Zustand handelt, die Schneekette eigentlich keineswegs eine streng kontrollierte Führung einzelner Glieder im Sinne ihrer Verdrehung in bezug auf die Längsachse der Kette voraussetzt. Man nimmt an, dass das Verharren auf streng kontrollierter Führung des Spannendes der seitlichen Schliesskette der Schneekette im Stand der Technik technisch unbegründet ist.

Der vorliegenden Erfindung liegt daher die Aufgabe zugrunde, eine willkürlich lösbare Rückschlageinrichtung, die vorzugsweise, nicht ausschliesslich, zur Aufnahme und zum Fassen eines Spannendes einer seitlichen Schliesskette in einem Ketten-Knotenpunkt einer Schneekette dient, zu schaffen, die das Spannende der seitlichen Schliesskette in irgendwelchem (also jedem) ihren Glied anhalten könnte. In dieser Aufgabe ist ausserdem die Absicht begriffen, die Grösse des Kettenglieds frei wählen zu können, was z.B. bei motorgetriebenen fahrbaren Arbeitsmaschinen, bei denen die Räder häufig mit (in jenem Fall "Schlamm"-) Ketten versehen werden müssen, die in kleingliedrigen Ausführungen ziemlich leicht versagen könnten, offensichtlich von entscheidender Bedeutung sein kann.

Die Erkentniss, dass man bei der Ausbildung der Erfindung nicht auf die Voraussetzung gebunden ist, die Kette streng kontrolliert führen zu müssen (die Kette darf sich demnach - selbstverständlich in einem vernünftigen Umfang - beim Einführen verdrehen), bietet auf überraschend einfache Weise zahlreiche Lösungsmöglichkeiten der vorstehend angegebenen Aufgabe.

Eine allgemeine Lösung der der Erfindung zugrundeliegenden Aufgabe ist mit den Patentansprüchen umfasst, die der vorliegenden Beschreibung folgen und die - zumindest vorläufig - als einen Bestandteil der Beschreibung anzusehen sind.

Die Erfindung wird nachstehend aufgrund der in der beiliegenden Zeichnung dargestellten Ausführungsbeispiele der betreffenden Einrichtung näher erläutert. Darin zeigt:
- Fig. 1: eine die vorliegende Erfindung verwirklichende Einrichtung, in eine Schneekette eingebaut, die auf einem gedachten (nicht dargestellten) Autoreifen angeordnet dreidimensional dargestellt ist,
- Fig. 2: ein Ausgangs-Ausführungsbeispiel der betreffenden Einrichtung in dreidimensionaler Darstellung; die Einrichtung befindet sich im Blockierungszustand,
- Fig. 3: die Einrichtung der Fig. 2 in einem Längsschnitt mit angedeutetem Endabschnitt einer seitlichen Schliesskette der Schneekette,
- Fig. 4: eine Draufsicht zu Fig. 3, woraus auch ein Knotenpunktglied zum Anschliessen von zwei diagonal querenden Kettensträngen der Schneekette ersichtlich ist,
- Fig. 5: ein zweites Ausführungsbeispiel der betreffenden Einrichtung in dreidimensionaler Darstellung, die Einrichtung im Blockierungszustand,
- Fig. 6: eine Modifikation des zweiten Ausführungsbeispiels der betreffenden Einrichtung in einem Längsschnitt,
- Fig. 7: eine Draufsicht zu Fig. 6 mit angedeutetem Drehhaken zum Anschliessen von diagonal querenden Kettensträngen der Schneekette,
- Fig. 8: ein drittes Ausführungsbeispiel der betreffenden Einrichtung in dreidimensionaler Darstellung, die Einrichtung im Blockierungszustand,
- Fig. 9: die Einrichtung der Fig. 8 in einem Längsschnitt mit angedeutetem Endabschnitt der seitlichen Schliesskette der Schneekette,
- Fig. 10: eine Draufsicht zu Fig. 9, woraus auch ein Knotenpunktglied zum Anschliessen von zwei diagonal querenden Kettensträngen der Schneekette ersichtlich ist,
- Fig. 11: ein viertes Ausführungsbeispiel der betreffenden Einrichtung in dreidimensionaler Darstellung, die Einrichtung im Blockierungszustand,
- Fig. 12: die Einrichtung der Fig. 11 in einem Längsschnitt mit angedeutetem Drehhaken zum Anschluss des Endabschnitts der seitlichen Schliesskette der Schneekette,
- Fig. 13: eine Draufsicht zu Fig. 12, woraus auch ein weiterer Drehhaken zum Anschliessen von zwei diagonal querenden Kettensträngen der Schneekette ersichtlich ist,
- Fig. 14: ein fünftes Ausführungsbeispiel der betreffenden Einrichtung in dreidimensionaler Darstellung, die Einrichtung im Blockierungszustand,
- Fig. 15: die Einrichtung der Fig. 14 in einem Längsschnitt mit angedeutetem Endabschnitt der seitlichen Schliesskette der Schneekette,
- Fig. 16: eine Draufsicht zu Fig. 15, woraus es ersichtlich ist, dass das zum Anschliessen von zwei diagonal querenden Kettensträngen der Schneekette dienende Knotenpunktglied an einen Endschäkel der seitlichen Schliesskette angehängt ist,
- Fig. 17: eine Modifikation des fünften Ausführungsbeispiels der betreffenden Einrichtung in dreidimensionaler Darstellung, die Einrichtung im Blockierungszustand,
- Fig. 18: die Einrichtung der Fig. 17 in einem Längsschnitt mit angedeutetem Endabschnitt der seitlichen Schliesskette und eingeführtem Spannende der seitlichen Schliesskette der Schneekette,
- Fig. 19: eine Draufsicht zu Fig. 18, ohne das Spannende der seitlichen Schliesskette, jedoch mit dem an den Endschäkel angehängtem Knotenpunktglied zum Anschliessen von zwei diagonal querenden Kettensträngen der Schneekette,
- Fig. 20: wie in Fig. 18, jedoch die Einrichtung im Deblockierungszustand,
- Fig. 21: ein sechstes Ausführungsbeispiel der betreffenden Einrichtung in dreidimensionaler Darstellung, die Einrichtung im Blockierungszustand,
- Fig. 22: die Einrichtung der Fig. 21 in einem Längsschnitt,
- Fig. 23: eine Draufsicht zu Fig. 22,
- Fig. 24: ein siebtes Ausführungsbeispiel der betreffenden Einrichtung in dreidimensionaler Darstellung, die Einrichtung im Blockierungszustand,
- Fig. 25: die Einrichtung der Fig. 24 in einem Längsschnitt,
- Fig. 26: eine Draufsicht zu Fig. 25,
- Fig. 27: ein achtes Ausführungsbeispiel der betreffenden Einrichtung in dreidimensionaler Darstellung, die Einrichtung im Blockierungszustand,
- Fig. 28: die Einrichtung der Fig. 27 in einem Längsschnitt mit angedeutetem dauerhaft angeschlossenem Ende der seitlichen Schliesskette mit an deren Endschäkel angehängtem Knotenpunktglied zum Anschliessen von zwei diagonal querenden Kettensträngen der Schneekette und mit eingegliedertem Spannende der seitlichen Schliesskette,
- Fig. 29: eine Draufsicht zu Fig. 28, jedoch ohne das Spannende der seitlichen Schliesskette,
- Fig. 30: wie in Fig. 28, jedoch die Einrichtung im Deblockierungszustand,
- Fig. 31: eine Modifikation des achten Ausführungsbeispiels der betreffenden Einrichtung in dreidimensionaler Darstellung, die Einrichtung im Blockierungszustand,
- Fig. 32: die Einrichtung der Fig. 31 in einem Längsschnitt mit dem angedeuteten Knotenpunktglied zum Anschliessen der zugehörigen Kettenstränge der Schneekette, und
- Fig. 33: eine Draufsicht zu Fig. 32.

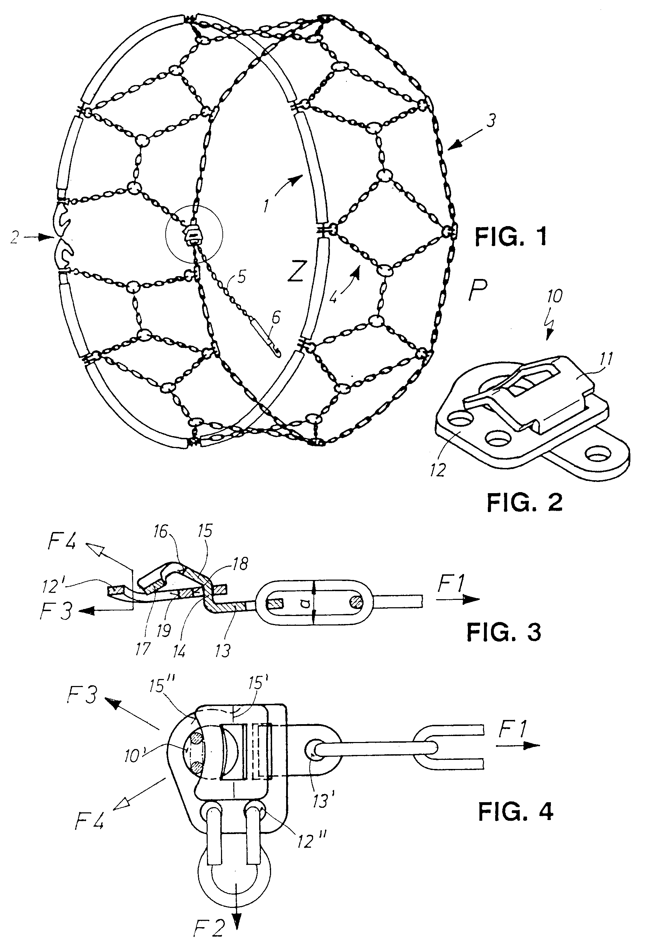

**Fig. 1** zeigt (lediglich zur prinzipiellen Veranschaulichung des Problemverhaltes) eine Schneekette, die einen segmentaren Ring 1 gleichbleibender Länge, der sich auf hinterer/innerer Seite **Z** eines Rades befindet und beim Anbringen an das Rad mittels eines Hakenpaares 2 in die endlose Gestalt überführbar ist, des weiteren einen weiteren, gegenüber diesem Ring angeordneten, mit ihm im geschlossenen Zustand koaxialen, in diesem Fall kettenartigen Ring 3, der sich auf vorderer/äusserer Seite **P** des Rades befindet und beim Anbringen an das Rad mittels einer die vorliegende Erfindung bildenden (in der Veranschaulichung eingekreisten) Einrichtung in die endlose Gestalt überführbar ist, sowie ein Geflechtssystem 4 von diagonal querenden und umfangsgerichteten Kettensträngen aufweist, das zwischen die Ringe 1, 3 eingegliedert und derart ausgebildet ist, dass insgesamt ein rotationsgeschlossener Geflechtsaufbau mit viereckigen Geflechtsfeldern entsteht.

In der Praxis ist damit zu rechnen, dass ein Reifen mehr oder weniger gefüllt ist. Eine Schneekette muss es jedoch trotzdem gewährleisten, sich an den Reifen beim gegebenen Füllunggrad desselben umfassend anpassen zu können.

Dies ist bei einer Schneekette im grossen und ganzen dadurch erzielbar, dass der eine von Kettensträngen-Knotenpunkten des Kettenringes 3 durch die den Gegenstand der Erfindung schaffende Einrichtung gebildet ist, gegenüber welcher Einrichtung sich ein zur Zusammenarbeit damit vorgesehenes, zum Zuziehen bestimmtes Ende 5 einer seitlichen Schliesskette befindet, die im eingebauten Zustand den Kettenring 3 bildet, welches Kettenende zweckmässig lang und an seinem freien Ende mit einer elastisch wirkenden Ausgleichs-Hakenvorrichtung 6 versehen ist.

Falls in der Zeichnung ein bestimmtes Bezugszeichen nicht vorliegt, es indessen in der Beschreibung erwähnt wird, sollte folgende Instruktion berücksichtigt werden: Die Bezugsnummern der Hauptteile sind zweistellig, zusätzliche Unterscheidungszeichen sind nicht ausgeschlossen. Die erste Nummer richtet sich nach der Reihenfolge der Ausführungsbeispiele (wie aus dem Figurenverzeichnis hervorgeht, gibt es acht Ausführungsbeispiele und zusätzlich drei Modifikationen derselben) und die zweite bedeutet in sämtlichen Ausführungsbeispielen ein gattungsgleiches bzw. dem gleichen Zweck dienendes Element. Eine Null ist zur Bezeichnung der jeweiligen Einrichtung als Gesamtheit reserviert.

Die Ausführungsbeispiele sind (obwohl auch Gruppierungen gemäss anderen Aspekten, wovon jedesmal die Rede ist, möglich sind) je nach den ausgeprägten Merkmalen, die die Form des Ausgangswerkstoffes und die Fertigungstechnologie betreffen, zu Gruppen gesammelt. Als eine erste (Fig. 2 bis 13) erscheint die Gruppe von Einrichtungen, für die es charakteristisch ist, dass sie jeweils nur aus zwei Bestandteilen bestehen und die beiden aus einem Flachwerkstoff als Ausgangsmaterial und durch eine Fertigungstechnologie, die für die beiden Elemente gleich ist, gefertigt sind.

**Fig. 2** bis **4** zeigen eine grundsätzliche Ausführungsform der willkürlich lösbaren Rückschlageinrichtung zum Aufnehmen und Fassen einer gespannten Rundgliederkette in einem Kettensträngenknotenpunkt gemäss der Erfindung. Die Einrichtung 10 enthält einen Sperrteil 11 und einen Aufnahme-/Führungsteil 12, die ausgebildet sind und zusammenarbeiten wie folgt.

Der Sperrteil 11 ist im wesentlichen dreisegmentartig: An ein flaches Zugsegment 13 schliesst sich in seiner Längenerstreckung, im wesentlichen normal dazu, ein die gleiche Breite aufweisendes Bandsegment 14, und daran ein - wiederum im wesentlichen rechtwinkelig gestellt, jedoch weg vom Zugsegment 13 weisend angeordnetes Sperrsegment 15 an, das breiter als die vorerwähnten zwei Segmente 13, 14 ist. Dieses ist in der Mitte seiner Länge quer auf seine Längenerstreckung dachartig gebogen (der Innenwinkel dieser dachartigen Bildung liegt in Grössenordnung von etwa 120°) und im Firstbereich 15' mit einer Ausnehmung 16 versehen, die im wesentlichen als ein querverlaufendes Rechteck ausgebildet ist. Die Ausnehmung 16 selbst wirkt bei der Funktionierung der Einrichtung nicht mit. Ein Stirnrand 15'' des Sperrsegments 15 ist konkav gekrümmt und ein längs dieses Stirnrandes verlaufender Werkstoffabschnitt 17 des Sperrsegments 15 ist um die Grössenordnung seiner Stärke bogenförmig eingedrückt. In der dargestellten Ausbildung der Einrichtung 10 ist die dem Stirnrand 15'' benachbarte Seite der Ausnehmung 16 mit diesem parallel verlaufend, also bogenförmig, ausgebildet, während die übrigen drei Seiten der Ausnehmung 16 in dieser Ausbildung geradlinig sind.

Der Aufnahme-/Führungsteil 12 der Einrichtung 10 ist im wesentlichen eine zwei Ausnehmungen aufweisende ebene Platte. Der einen Ausnehmung 18 davon, die dem Bandsegment 14 des Sperrteils 11 unter gewisser Lockerheit angepasst ist und somit einer Rechteckspalte ähnelt, folgt in der Längenerstreckung mit einem Abstand eine Rundlochausnehmung 19, deren Durchmesser der Grössenordnung der Breite von den Segmenten 13, 14 des Sperrteils 11 ist und die als ein Durchgang für das zuziehende Ende 5 der seitlichen Schliesskette der Schneekette dient. Ein längs der Ausnehmung 19 verlaufender materieller Stirnabschnitt 12' des Aufnahme-/Führungsteils 12 ist um die Grössenordnung seiner eigenen Stärke bogenartig in dem Sinne gewölbt, dass seine Krümmung der des Werkstoffabschnitts 17 des Sperrteils 11 entgegengerichtet ist, so dass die beiden Krümmungsextrempunkte der Abschnitte 17 und 12' etwa in derselben Ebene, d.h. in der Ebene, die mit einer Systemebene des Aufnahme-/Führungsteils 12 parallel ist, liegen.

Der Sperrteil 11 ist derart in den Aufnahme-/Führungsteil 12 eingelegt, dass sich das Zugsegment 13 des Sperrteils 11 sich auf jener Seite des Aufnahme-/Führungsteils 12 befindet, wo sich die (konkave) Hohlseite des Stirnabschnitts 12' des Aufnahme-/Führungsteils 12 befindet; das Sperrsegment 15 des Sperrteils 11 befindet sich auf der dieser gegenüberliegenden Seite des Aufnahme-/Führungsteils 12 und das Bandsegment 14 des Sperrteils 11 befindet sich in der rechteckspaltartigen Ausnehmung 18 des Aufnahme-/Führungsteils 12.

Bei der gegebenen gegenseitigen Anbringung der Teile 11, 12 sind der bogenförmig eingedrückte Abschnitt 17 des Sperrteils 11 und die Rundlochausnehmung 19 des Aufnahme-/Führungsteils 12 des weiteren so zueinander gestellt, dass der konkave Stirnrand 15'' des Sperrteils 11 und der gegenüberliegende Abschnitt der Rundlochausnehmung 19 des Aufnahme-/Führungsteils 12 eine etwa linsenförmige Aufnahmeöffnung 10' (Fig. 4) bilden, deren Grösse so abgestimmt ist, dass nur noch das Kettenglied des zuziehenden Endes 5 der seitlichen Schliesskette der Schneekette nach seiner kürzesten Erstreckung α (Fig. 3) hindurch geht, wenn eine Flachseite des Kettenglieds im wesentlichen rechtwinkelig auf die Längsachse der Einrichtung 10 liegt. Die grösste Erstreckung der linsenförmigen Aufnahmeöffnung 10' ist hierzu zweckmässigerweise kleiner als der Durchmesser der Rundlochausnehmung 19.

Das Zugsegment 13 des Sperrteils 11 weist im Bereich seines freien Endes eine Anschlussausnehmung 13' auf zum - in diesem Fall unlösbaren - Anschluss eines Endes der seitlichen Schliesskette der Schneekette. Zum Anschluss der diagonal querenden Kettenstränge der Schneekette im betreffenden Kettenknotenpunkt ist der Aufnahme-/Führungsteil 12 der Einrichtung 10 zweckmässigerweise im Bereich ausserhalb einer Projektion des Sperrteils 11 mit einem Paar Anschlussausnehmungen 12'' zum Anschliessen eines Knotenpunktglieds versehen, an das die erwähnten Kettenstränge angeschlossen werden. Eine Systemachse des Knotenpunktglieds ist in diesem Fall lotrecht zur Systemachse der betreffenden Einrichtung gestellt (Fig. 4).

Durch das an die Ausnehmungen 12'' angeschlossene Knotenpunktglied und die an die Ausnehmung 13' angeschlossene Kette wird im Bereich der Einrichtung 10 offensichtlich eine Wirkungsebene der Zugkräfte **F1**, **F2** (die letzte als eine Resultierende von zwei diagonal querenden Kettensträngen) bestimmt, und ein eingeschnapptes Glied der eingeführten und gesperrten Kette, in gegebenem Fall des zuziehenden Endes 5 der seitlichen Schliesskette, ist im wesentlichen rechtwinkelig auf diese Ebene gestellt.

Aus Fig. 3 geht hervor, dass die Zuziehkraft **F3** des zuziehenden Endes 5 der seitlichen Schliesskette der Schneekette unterhalb des Aufnahme-/Führungsteils 12 wirkt. Wenn man den Einfluss einer (kleineren) Kraft **F4** der Hilfsbefestigung des freien Abschnitts des zuziehenden Endes 5 der seitlichen Schliesskette der Schneekette vernachlässigt, wird durch die drei Kräfte **F1**, **F2** (diese als Resultierende der zwei Kräfte) und **F3** eine gemeinsame Spannungsebene definiert, die ausserhalb der Ebene des Aufnahme-/Führungsteils 12 liegt. Es liegt somit nahe, dass in der Einrichtung 10 bei den beschriebenen Spannungsverhältnissen ein Drehmoment entsteht, mittels welchen der bogenförmig eingedrückte Abschnitt 17 des Sperrsegments 15 des Sperrteils 11 und der Stirnabschnitt 12' des Aufnahme-/Führungsteils 12 zueinander gedrückt werden, so dass die linsenförmige Aufnahmeöffnung 10' dauernd aufrechterhalten wird. In diesem Sachverhalt ist eigentlich das Wesen der erfindungsgemässen sperrweisen Sicherung des zugezogenen Endes 5 der seitlichen Schliesskette der Schneekette enthalten. Die Einrichtung 10 öffnet sich nicht und die linsenartige Aufnahmeöffnung 10' löst sich nicht, bis ein Gegenmoment bzw. eine neue Kraft vorliegt, die z.B. rechtwinkelig auf die Spannungsebene der Kräfte **F1**, **F2**, **F3** wirkt zur Erzwingung der Änderung der gegenseitigen Lage von Teilen 11, 12.

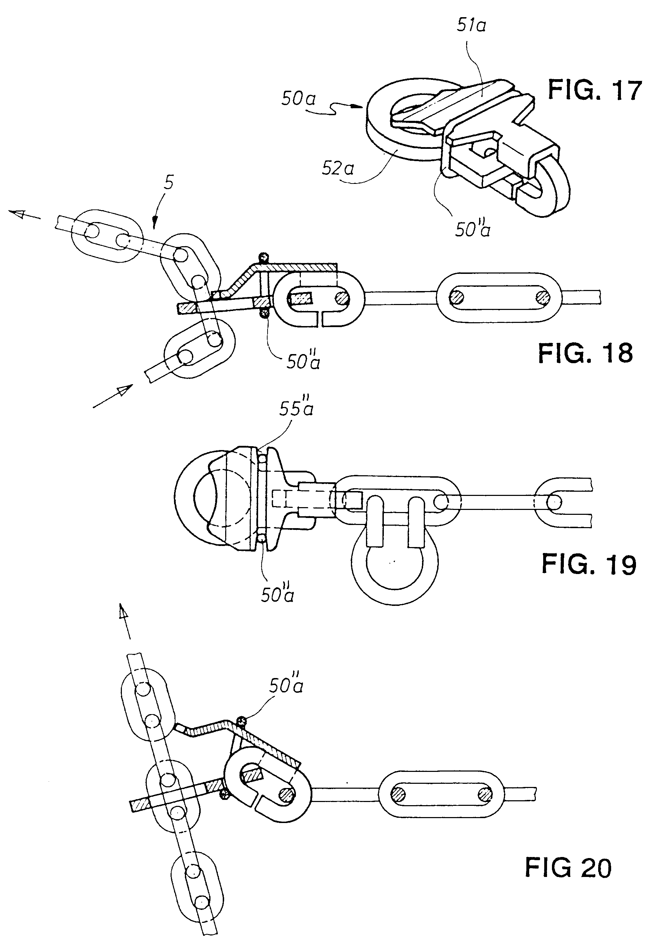

Die tatsächliche Rückschlagarretierung des gespannten zuziehenden Endes 5 der seitlichen Schliesskette der Schneekette geschieht im wesentlichen formschlüssig: ein dem in der linsenartigen Aufnahmeöffnung 10' sich befindenden Kettenglied folgendes oberes Kettenglied, das selbstverständlich gegenüber dem ersterwähnten Kettenglied um 90° verdreht ist, liegt unter dem Einfluss der Kraft **F3** auf den Abschnitten 12', 17 der Teile 12, 11 der Einrichtung 10 auf (vgl. die Veranschaulichung Fig. 18).

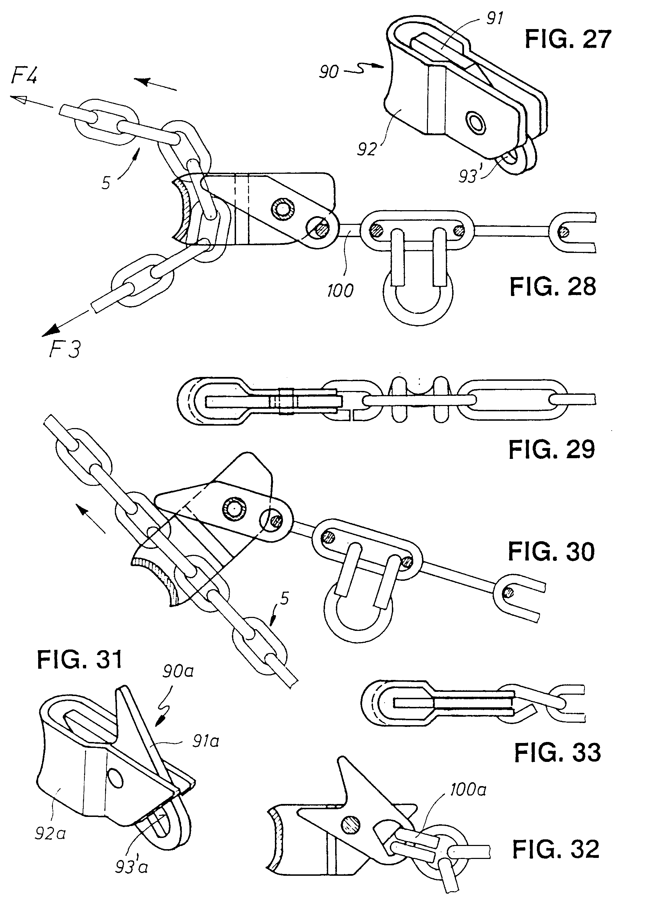

Versuche mit materiellen Prototypen zeigen, dass bei den Teilen 11, 12 ein Armverhältnis durchührbar ist, mit dem weder eine ausserordentlich grosse Kraft (die Verwendung von Fingerstärke einer männlcihen Hand wird hierzu vorgesehen) noch ein ausserordentlich umfangreicher Schwenkhub der Teile 11, 12 zum Öffnen der gespannten Einrichtung 10 erforderlich sind (vgl. die Veranschaulichung Fig. 20). Ausserdem ist es nicht unmöglich, erfindungsgemäss ein Mittel zur Erleichterung des Losmachens vorzusehen (vgl. die Veranschaulichung Fig. 31 bis 33).

Das Ziel der Erfindung, d.h. eine Kette bei *irgendwelchem* Kettenglied sperren zu können, wird einfach erreicht, indem der Bewegungsablauf der einzugliedernden Kette im geöffneten Zustand der Einrichtung 10 (keine linsenartige Aufnahmeöffnung 10') keineswegs besonders gehindert ist, d.h. die Kette kann sich, falls nötig, vom Glied zu Glied auch beliebig verdrehen. Wenn das zuziehende Ende 5 der seitlichen Schliesskette der Schneekette gespannt wird und man die Zugkraft nachlässt, bildet die Einrichtung, die bisher geöffnet war, von selbst eine linsenartige Aufnahmeöffnung 10' und klemmt darin das dort befindliche Kettenglied ein.

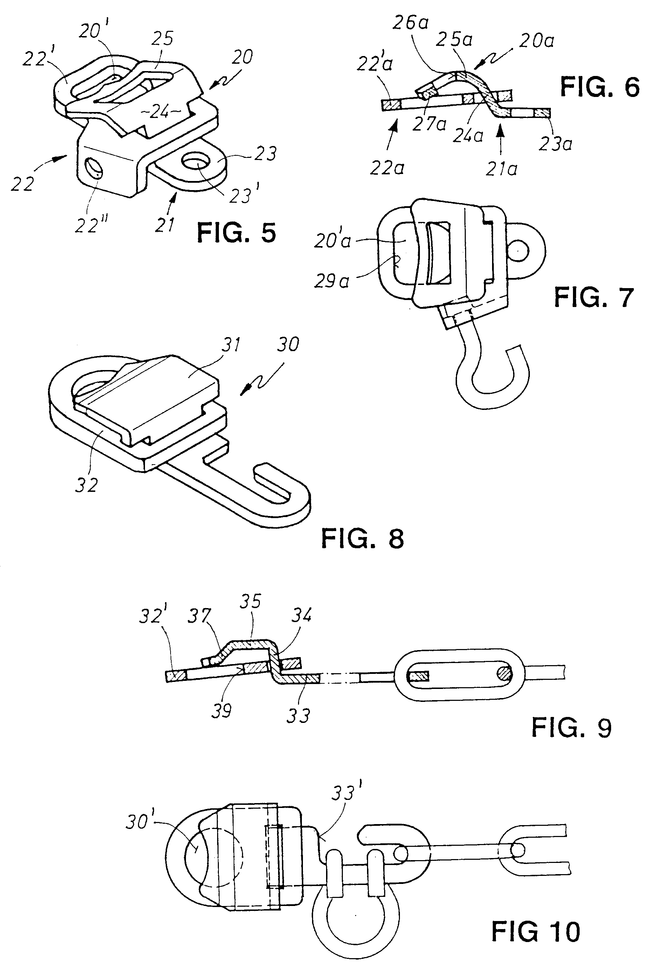

**Fig. 5** ist eine perspektivische Aufzeichnung einer Einrichtung 20 und **Fig. 6-7** sind orthogonale Aufzeichnungen einer modifizierten Einrichtung 20', wobei es sich um zwei Ausführungsvarianten handelt, die sich von jener der Fig. 2 bis 4 in den folgenden Merkmalen unterscheiden: Ein Bandsegment 24, 24a und ein Sperrsegment 25, 25a eines Sperrteils 21, 21a bilden miteinander einen ununterbrochen gekrümmten bogenförmigen Teil, der an einen Zugsegment 23, 23a des Sperrteils 21, 21a in der Weise angeschlossen ist, dass ein Sockelabschnitt des Bandsegments 24, 24a einen Winkel von etwa 120° mit dem Zugsegment 23, 23a (im wesentlichen auch mit einem Aufnahme-/Führungsteil 22, 22a) einschliesst (Fig. 6); wie bei dem vorangehenden Ausführungsbeispiel wird eine Zwei-Ebenen-Beschaffenheit eines stirnseitigen Abschnitts 27, 27a des Sperrteils 21, 21a zum Zugsegment 23, 23a desselben beibehalten. Eine Ausnehmung 26, 26a, die auch bei diesen Ausführungsbeispielen an der Funktionierung der Einrichtung nicht beteiligt ist, erstreckt sich zwischen einer Scheitellinie des oben erwähnten bogenförmigen Teiles und dem stirnseitigen Abschnitt 27, 27a. Eine Ausnehmung 29, 29a des Aufnahme-/Führungsteils 22, 22a ist hier durch eine Vereinigung eines an einen stirnseitigen Abschnitt 22', 22'a angrenzenden, im wesentlichen rechteckförmigen und eines unterhalb des Sperrsegments 25, 25a des Sperrteils 21, 21a sich befindenden halbkreisförmigen Anteils gebildet. Ein Abschnitt des Aufnahme-/Führungsteils 22, 22a, im welchen eine Ausnehmung 22'', 22''a zum dauernden Drehanschluss eines Hakens zum Anschliessen diagonal querender Kettenstränge vorgesehen ist, ist hier rechtwinkelig in Richtung weg vom Sperrsegment 25, 25a gebogen und ausserdem in einer Draufsicht (Fig. 7) so gestellt, dass die Richtungen von Kräften **F1** und **F2** (der Fig. 4 analog) einen Winkel von etwa 75° einschliessen. Die Ausführung nach Fig. 5 und ihre Modifikation gemäss Fig. 6-7 unterscheiden sich nur nach der Ausbildung eines Stirnrandes des stirnseitigen Abschnitts 27, 27a des Sperrteils 21, 21a (und nach der sich daraus ergebenden Ausbildung einer Aufnahmeöffnung 20', 20'a). Bei der Ausführung gemäss Fig. 5 ist dieser Stirnrand etwa **{**-förmig (Materialseite rechts) ausgebildet, d.h. er ist aus zwei konkav verlaufenden Unterabschnitten unter Zwischenbildung einer mittigen Spitze zusammengesetzt, wogegen er bei der Ausführung Fig. 6-7 dem der Fig. 2-4 gleich ist. Zum Unterschied von der Einrichtung 10 (Fig. 2 bis 4), bei welcher das Sperrsegment 15 in der Längsrichtung eine gleichbleibende Breite aufweist, weitert sich die Breite des Sperrsegments 25, 25a der hier dargestellten Einrichtungen 20, 20a ununterbrochen in Richtung gegen den Frontabschnitt 27, 27a hin.

**Fig. 8** bis **Fig. 10** zeigen eine Einrichtung 30, deren Sperrteil 31 ein flaches Zugsegment 33 besitzt, das längs einer Systemachse länglich ausgeschnitten ist, wobei eine dadurch entstandene Ausnehmung 33' gegen eine Längsseite des Zugsegments 33 mündet, so dass das mit der Ausnehmung 33' gebildete Zugsegment einem Haken ähnelt und auch als Haken verwendet wird. Im gegebenen Fall (Fig. 10) sind im Bereich der Ausnehmung 33' sowohl die seitliche Schliesskette als auch - rechtwinkelig dazu - ein Knotenpunktglied zur Aufnahme von diagonal querenden Kettensträngen der Schneekette an das Zugsegment 33 angeschlossen. Es ist also zum ersten Mal im Vergleich zu den vorangehenden Einrichtungen eine Eigenheit der Einrichtung 30, dass ein Aufnahme-/Führungsteil 32 der Einrichtung 30 lediglich zur Aufnahme vom zuziehenden Ende 5 der seitlichen Schliesskette vorgesehen ist.

Im übrigen sind das Zugsegment 33 und Bandsegment 34 des Sperrteils 31 im wesentlichen gleich wie ihre Äquivalente (13, 14) bei der Einrichtung 10 angeordnet, während ein Sperrsegment 35, das hier vollflächig (ohne eine Ausnehmung) ist, auf seiner überwiegenden Länge in einer Ebene angeordnet ist, die zu der Ebene des Zugsegments 33 parallel ist, und nur sein vorderer, über einer Rundlochausnehmung 39 des Aufnahme-/Führungsteils 32 befindlicher Abschnitt unter einem Winkel von etwa 45° geneigt in Richtung des Aufnahme-/Führungsteils 32 verläuft, wobei ein Stirnabschnitt 37 selbst im wesentlichen wiederum etwa parallel zum Aufnahme-/Führungsteil 32 verläuft (Fig. 9). Die Breite des geneigten Vorderabschnitts schmälert sich dabei bündig in Richtung des Stirnabschnitts 37 (Fig. 10). Eine Aufnahmeöffnung 30' für das zuziehende Ende 5 der seitlichen Schliesskette ist im wesentlichen der Aufnahmeöffnung 10' des ersten Ausführungsbeispiels gleich.

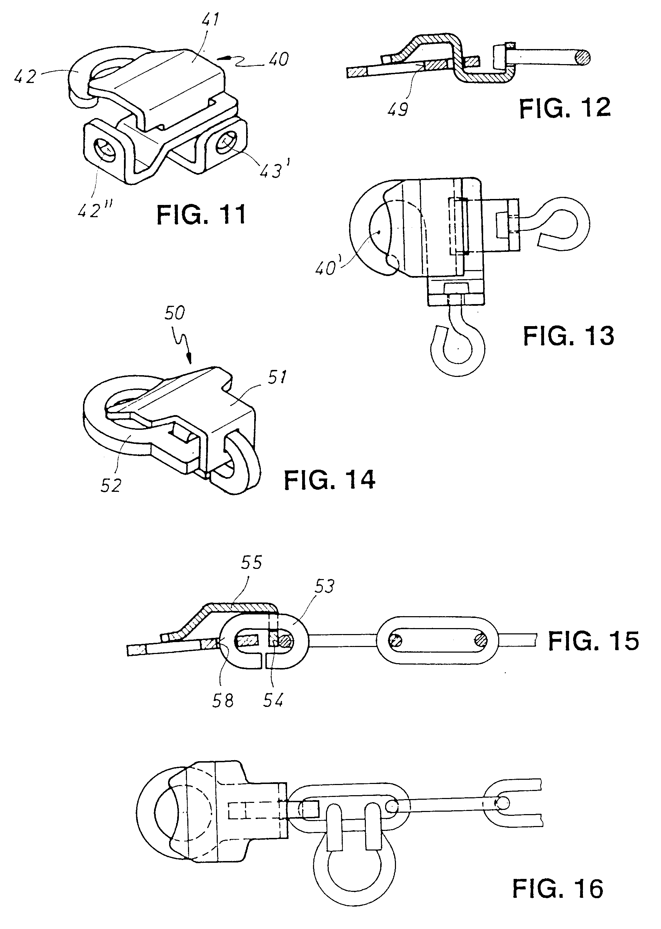

**Fig. 11** bis **Fig. 13** zeigen eine Einrichtung 40, für die es charakteristisch ist, dass die Ebene der Kräftewirkung von **F1** (an einem Sperrteil 41) und **F2** (an einem Aufnahme-/Führungsteil 42) im wesentlichen eine Ebene des Aufnahme-/Führungsteils 42 ist und dass eine Rundlochausnehmung 49 des Aufnahme-/Führungsteils 42 zu einer Längsseite hin nach aussen mündet (Fig. 13), so dass der Aufnahme-/Führungsteil 42 ein seitliches Einlegen des zuziehenden Endes 5 der seitlichen Schliesskette ermöglicht. Die ersterwähnte Eigenartigkeit wird dabei dadurch erreicht, dass Ausnehmungen 43', 42'', die Drehlager zur Aufnahme von Anschlusshaken zum Anschliessen von Kettensträngen der Schneekette bilden, sich in entsprechenden Umbiegungen des Sperrteils 41 befinden, die im wesentlichen senkrecht zu einer Systemebene der Einrichtung 40 gestellt sind.

Bei einem im folgenden beschriebenen Ausführungsbeispiel der Einrichtung und einer Modifikation davon ist, soweit es sich um die Funktionierung der Einrichtung handelt, ein Zweielementenaufbau beibehalten, baulich sind sie jedoch aus drei bzw. vier Bestandteilen zusammengesetzt.

Es ist eine Eigenheit der Einrichtung 50 der **Fig. 14** bis **Fig. 16**, dass ein Zugsegment 53 eines Sperrteils 51 getrennt von einem Blechteil aus einem Stabeisen, im gegebenen Fall einem Vierkanteisen, vorgefertigt und kettengliedartig gebogen, aber nicht unbedingt in sich geschlossen ist (Fig. 15). Das als ein Kettenglied ausgebildete Zugsegment 53, das kreuzweise auf eine Systemebene der Einrichtung 50 gestellt und in seiner längeren Erstreckung in Richtung der Systemachse der Einrichtung 50 gerichtet ist, ist durch eine diesem zugeordnete Ausnehmung 58 eines Bandsegments 54 eingelegt und danach mit dem Blechteil des Sperrteils 51 untrennbar verbunden, z.B. zusammengeschweisst, wobei sich das Bandsegment 54 im eingebauten Zustand in der Nähe der Längenmitte des Gliedes, vorzugsweise in der von einem Aufnahme-/Führungsteil 52 wegweisenden Hälfte davon, befindet. Und statt einer rechteckspaltartigen Ausnehmung, wie sie bei den vorangehenden Ausführungen zur Aufnahme des Bandsegments des Sperrteils in dem Aufnahme-/Führungsteil vorgesehen ist, ist hier im Aufnahme-/Führungsteil 52 eine quadratische Ausnehmung 58 zur Aufnahme und freien Schwenkungsbewegung des gliedartigen Zugsegments 53 und des daran gebundenen Blechteils des Sperrteils 51 vorgesehen.

Es ist eine weitere Eigenheit dieser Ausführung, dass ein Knotenpunktglied zur Übertragung der Kraft **F2** an einen Endschäkel zur Übertragung der Kraft **F1** (Fig. 16) angeschlossen ist, so dass auch hier der Aufnahme-/Führungsteil 52 nur zur Aufnahme des zuziehenden Endes 5 der seitlichen Schliesskette vorgesehen ist.

**Fig. 17** bis **Fig. 20** zeigen eine Modifikation der vorangehenden Ausführung, deren Wesen es ist, dass zwischen dem blech- und gliedartigen Teil des Sperrteils statt der Schweissung eine formschlüssige Verbindung verwendet wird, die darauf basiert, dass der Blechteil nach dem seinem Umformen den gliedartigen Teil an der Stelle der Vereinigung beider Teile ummantelungsweise untrennbar heranhält. Es ist des weiteren eine Eigenart dieser Ausführung, dass zwecks zusätzlicher Sicherung gegen das automatische Entsperren der Einrichtung eine Möglichkeit gezeigt ist, um einen elastisch dehnbaren Einbindering 50''a verwenden zu können. (Diese Möglichkeit ist nur als eine Information darüber in die Anmeldung aufgenommen, dass eine Sicherung gegen automatisches Entsperren nach der Erfindung nicht ausgeschlossen ist, eine disbezügliche Notwendigkeit kam jedoch bei Durchführung von Prototypenversuchen nicht als unbedingt notwendig vor.) Dieser Ring ist dadurch lagegesichert, dass er durch seitliche Ausschnitte 55''a des Blechteils des Sperrteils 51a geführt ist.

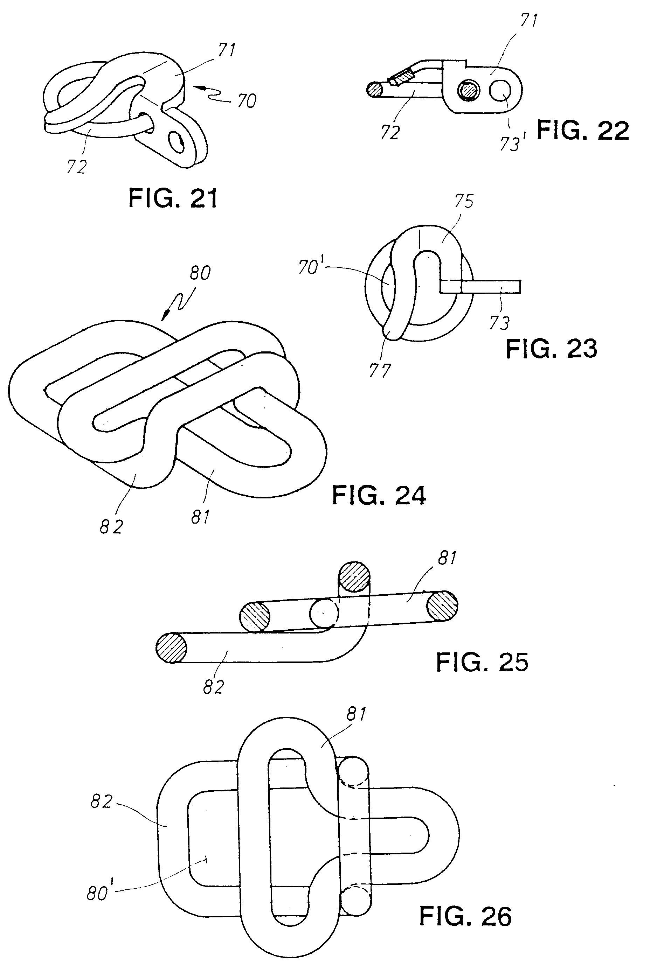

Zwei weitere, in **Fig. 21** bis **Fig. 23** bzw. **Fig. 24** bis **Fig. 26** dargestellte Einrichtungen sind wiederum zweikomponentenartig.

Vom baulichen Standpunkt aus ist die Einrichtung der Fig. 21 bis 23 darin eigenartig, dass der Ausgangswerkstoff zur Fertigung des einen, und die der Fig. 24 bis 26 darin eigenartig, dass der Ausgangswerkstoff zur Fertigung beider Bestandteile ein Rundstabeisen ist.

Fig. 21 bis 23 zeigen eine Einrichtung 70, deren Sperrteil 71 einstückig und im wesentlichen so ausgebildet ist, als ob man das Sperrsegment 35 des Sperrteils 31 nach Fig. 8 bis 10 und die Ausnehmung 16 der Fig. 2 bis 4 vereinigt und die letzte an einer Längsseite des Sperrsegments 35 nach aussen geführt (und dadurch an einer Längsseite einen Bogenabschnitt des Sperrteils abgesondert) hat, wogegen die Zug- und Bandsegmente des Sperrteils, die hier ursprünglich mit dem Flachteil des Sperrsegments 35 koplanar sind, nachfolgend in bezug auf die Ebene des letzteren längs einer Systemachse kreuzweise umgebogen und darin hintereinander zwei Rundlochausnehmungen 73' vorgesehen sind. Diejenige davon, die von einem Stirnabschnitt 77 am weitesten entfernt ist, ist zur Aufnahme eines Knotenpunkt-Kettenglieds, und die andere ist zur Aufnahme eines Aufnahme-/Führungsteils 72 der Einrichtung vorgesehen, der in diesem Beispiel einfach als ein **O**-Ring aus einem Rundstabeisen ausgebildet ist. Zwischen dem Aufnahme-/Führungsteil 72 und Stirnabschnitt 77 des Sperrteils 71 wird auch hier im Sperrzustand eine linsenartige Aufnahmeöffnung 70' (Fig. 23) gebildet.

In der Gruppe von Zweikomponenten-Einrichtungen stellt die Einrichtung 80 der Fig. 24 bis 26 eine überraschend einfache Lösung dar. Jede von ihren Komponenten ist als ein in sich geschlossenes Element aus einem Rundstabeisen gefertigt und ausgebildet wie folgt.

Ein Aufnahme-/Führungsteil 82 der Einrichtung 80 ist ursprünglich ein Rechteckglied mit rundlaufenden Ecken, dessen einer Endbereich, der sich auf etwa ein Drittel der Länge der Langseite des erwähnten Rechtecks erstreckt, in bezug auf den anderen Abschnitt, im gegebenen Fall (Fig. 25) nach oben, rechtwinkelig gebogen ist. Ein Sperrteil 81 ähnelt in seiner Ausbildung einem in einer Ebene befindlichen Umriss eines Buchstaben **T** (Fig. 26), wobei die Winkel und Ecken dieses Umrisses ebenso rundlaufend ausgebildet sind. Eine Aussenweite quer über denjenigen Teil des genannten Umrisses, der den Stehschenkel vom **T** betrifft, ist einer Innenweite des oben genannten gebogenen Endabschnittes des Aufnahme-/Führungsteils 82 angepasst, wobei der letzterwähnte Teil des Sperrteils 81 im zusammengesetzten Zustand der Einrichtung 80 in den genannten gebogenen Bereich des Aufnahme-/Führungsteils 82 eingeschoben ist. Eine Aufnahmeöffnung 80' für das zuziehende Ende 5 der seitlichen Schliesskette ähnelt der Aufnahmeöffnung 20'a der Einrichtung 20a (Fig. 7).

Bei den bisher dargestellten Ausführungen handelte es sich um einen Funktionsverhalt, wie es in Fig. 3-4 veranschaulicht ist, d.h. ein Kettenglied des zuziehenden Endes 5 der seitlichen Schliesskette, das zwischen dem Aufnahme-/Führungsteil und dem Sperrteil der Einrichtung gesperrt wird, ist mit seiner Langseite im wesentlichen senkrecht auf die Ebene der Kräftewirkung **F1**, **F2** gestellt. Demgegenüber zeigen die folgenden zwei Ausführungsbeispiele, dass die Erfindung nicht auf eine derartige Funktionssituation eingeschränkt ist.

Für eine Einrichtung 90 nach **Fig. 27** bis **Fig. 29** und ihre Modifikation, d.h. eine Einrichtung 90a gemäss **Fig. 31** bis **Fig. 33**, ist es zum Unterschied von den vorangehenden Einrichtungen charakteristisch, dass auch ein Anschluss-Kettenglied 100 bzw. ein Knotenpunkt-Schäkel 100a an der Wirkung der Einrichtungen beteiligt ist, wobei der letztere der seitlichen Schliesskette und den diagonal querenden Kettensträngen der Schneekette gemeinsam ist.

Die Einrichtung 90, 90a weist einen Aufnahme-/Führungsteil 92, 92a auf, der aus einem Blechband gefertigt ist, das seiner Längenerstreckung nach zunächst so gebogen wurde, dass es ein etwa ∩-förmiges Aussehen erhält, deren lichte Weite der äusseren schmalen Erstreckung des Gliedes des zuziehenden Endes 5 der seitlichen Schliesskette entspricht, wonach das Band noch den folgenden zwei Umformungsschritten unterworfen wurde: Die freien Enden des ∩-Gebildes wurden an einer Entfernung von ihren freien Enden, die auf eine Hälfte, vorzugsweise mehr, ihrer Länge bemessen ist, unter einem geneigten Übergang bis zu einem gewissen Abstand zueinander genähert, und der gekrümmte, d.h. Scheitelteil des ∩-Gebildes, das Band nunmehr seitlich gesehen, wurde bogenartig eingedrückt, ohne dadurch den davor bestehenden, in einer Draufsicht sichtbaren gekrümmten Verlauf des Scheitelabschnitts beeinträchtigt zu haben. Es ergibt sich somit ein zweckmässig ausgebildeter bogenartiger Gleittrog zur Führung des zuziehenden Endes 5 der seitlichen Schliesskette. Die freien Enden des so ausgebildeten Aufnahme-/Führungsteils 92 sind auf einer Breitenerstreckung, die etwa eine Breitenhälfte des ursprünglichen Bandes umfasst, unter einem Winkel von etwa 45° zueinander deckungsgleich zugeschnitten (Fig. 28), während die freien Enden des so ausgebildeten Aufnahme-/Führungsteils 92a auf der ganzen Breitenerstreckung des ursprünglichen Bandes unter einem Winkel von etwa 45° zueinander deckungsgleich zugeschnitten sind.

Ein Sperrteil 91 der Einrichtung 90 ist als ein einfach flacher länglicher Teil ausgebildet (Fig. 28), der an einem Ende schräg zugeschnitten ist, so dass sich dort eine Keilform ergibt, wobei die Keilspitze zweckmässigerweise abgerundet ist, während das andere Ende durch eine Abrundung abgeschlossen ist, die die ganze Breite des Elements umfasst. In geometrischer Mitte dieser Abrundung ist eine kreisrunde Ausnehmung 93' vorgesehen. Auch ein Sperrteil 91a der Einrichtung 90a ist als ein flacher länglicher Teil ausgebildet (Fig. 32) und auch er endet am "anderen" Ende durch eine Abrundung, die dessen ganze Breite umfasst, doch zum Unterschied von dem vorangehenden Sperrteil, dessen Breite im Grunde (mit der Ausnahme des Keils und der Abrundung) durchaus gleich ist, wächst hier die Breite des Elements gleichmässig kontinuierlich in Richtung zum "ersten" Ende, und das erwähnte "erste" Ende ist mit einer **V**-Ausnehmung versehen, so dass dort zwei in bezug auf eine Längsachse des Elements symmetrisch gestellten Keile vorhanden sind, und zum Unterschied von der kreisrunden Ausnehmung 93' des Sperrteils 91 ist hier eine im wesentlichen halbkreisförmige Ausnehmung 93'a vorgesehen, die derart gelegen ist, dass ihre Durchmesserseite gegen eine Spitze desjenigen Keils gerichtet ist, der sich auf der Seite der Bogenseite der Ausnehmung 93'a befindet.

Der Sperrteil 91, 91a ist in den Zwischenraum der freien Enden des flachen Aufnahme-/Führungsteils 92, 92a eingelegt und dabei so angeordnet, dass in dem Zustand, wenn er gegenüber dem zuziehenden Ende 5 der seitlichen Schliesskette die Rückschlag-Sperrfunktion ausübt, die schräge Keilseite des Sperrteils 91 bzw. die schräge Seite von demjenigen der zwei Keile des Sperrteils 91a, der sich auf der Seite der Durchmesserseite der Ausnehmung 93'a befindet, mit Profilkanten des Aufnahme-/Führungsteils 92, 92a parallel ist, wobei die Schrägungskante des freien Endes des Aufnahme-/Führungsteils 92, 92a durch einen Flächenabschnitt der Ausnehmung 93', 93'a in der Grösse von im wesentlichen einem Drittel bis einer Hälfte davon verläuft.

Beim derartigen gegenseitigen Zusammenhang des Sperrteils 91, 91a und des Aufnahme-/Führungsteils 92, 92a ist im wesentlichen im Bereich der Halbierung der Längenerstreckung des Sperrteils 91, 91a ein Drehzapfen angeordnet, der den Sperrteil und den Aufnahme-/Führungsteil miteinander verbindet und diesen gegenseitige relative Verschwenkung sicherstellt. Was jedoch die Anbringungsstelle des Drehzapfens in bezug auf die Breitenerstreckungen des einen und des anderen Teiles angeht, ist der Drehzapfen bei der Einrichtung 90 im wesentlichen in der Halbierung der Bandbreite sowohl des Sperrteils als auch des Aufnahme-/ Führungsteils angeordnet, während er bei der Einrichtung 90a bei ihrem Sperrteil 91a gegen diejenige seine Längsseite, die sich auf der Seite der Durchmesserseite der Ausnehmung 93'a befindet, und bei ihrem Aufnahme-/Führungsteil 92a gegen diejenige seine Seite verschoben ist, die dank dem Vorhandensein des schrägen Zuschnitts im Vergleich zu der anderen Seite länger ist.

Der gemäss der obigen Beschreibung freie, d.h. seitens des Aufnahme-/Führungsteils 92, 92a nicht gedeckte Anteil der Ausnehmung 93', 93'a ist laut der oben erwähnten Eigenartigkeit dieser zwei Ausführungsbeispiele durch das Anschluss-Kettenglied 100 bzw. den Knotenpunkt-Schäkel 100a besetzt, die, wie es aus der Zeichnung klar hervorgeht, dadurch, dass sie jeweils auf die schrägen Kanten des Aufnahme-/Führungsteils 92, 92a aufliegen, zu dem Zeitpunkt des Sperrens des zuziehenden Endes 5 der seitlichen Schliesskette der Schneekette als eine Verschwenkungsbegrenzung für den Sperrteil 91, 91a dienen.

Bei der Beschreibung der Ausführungsbeispiele wurde nicht besonders darauf hingewiesen, dass man bei jedem Ausführungsbeispiel nötigenfalls Hilfselemente, z.B. Griffe, Handhaben, Ansätze u.ä., zur Erleichterung des Freilassens des zuziehenden Endes 5 der seitlichen Schliesskette der Schneekette vorsehen kann. Zur Veranschaulichung der Tatsache, dass eine solche Möglichkeit immer vorliegt, ist hier die Einrichtung 90a gezeigt, deren anderer von zwei Keilen dazu vorgesehen ist, dass man mit dessen Hilfe die Einrichtung 90a löst, wenn man das gesperrte zuziehende Ende 5 der seitlichen Schliesskette lösen will.

Da die Erfindung im Laufe der Überwindung von allgemeinen Problemen bei einer Schneekette entstand, liegt es nahe, dass alle oben beschriebenen Ausführungsbeispiele der betreffenden Einrichtung an die Frage der Aufnahme, Führung und des Haltens einer *Kette*, darunter insbesondere einer Rundgliederkette gebunden sind. Die Erfindung entfernt sich jedoch dadurch keineswegs von den Fragen der Aufnahme, Führung und des Haltens andersartiger Ketten sowie von den Fragen der Aufnahme, Führung und des z.B. "zusammenkneifenden" Haltens nichtkettenartiger strangförmiger Elemente, sei es Elemente, die an sich im wesentlichen als starr und nichtzusammendrückbar betrachtet werden, oder biegsamer bzw. elastisch nachgiebiger Elemente. Bei den letzterwähnten Beispielen der Verwendung der vorgeschlagenen Einrichtung ändert sich keineswegs die Grundlehre der Erfindung, geändert werden lediglich allgemeine Durchführungsmerkmale, die eine entsprechende Anpassung der betreffenden Einrichtung an das gegebene Anschlusselement voraussetzen.

## Patentansprüche

1. Willkürlich lösbare Rückschlageinrichtung zum Aufnehmen und Sperren einer gespannten Rundgliederkette, insbesondere zum beim Anbringen vorzunehmenden Eingliedern eines freien zuziehenden Endes einer seitlichen Schließkette in einem vom anderen Ende dieser seitlichen Schließkette und zwei diagonal querenden Kettensträngen einer Schneekette für Fahrzeuge gebildeten Kettenstrang-Knotenpunkt, enthaltend einen Aufnahme-/Führungsteil, in dem ein Durchgang zur Aufnahme und Führung des zuziehenden Endes der seitlichen Schließkette der Schneekette ausgebildet ist, und einen Sperrteil, der manuell lösbar ist, dadurch gekennzeichnet, daß der Durchgang des Aufnahme-/Führungsteils (12; 22, 22a; 32; 42; 52, 52a; 72; 82; 92, 92a) zur Führung der Kette quer zu der Achse der Kette derart ausgebildet ist, daß die Kette sich von Glied zu Glied nötigenfalls um ihre Achse um mindestens 90% verdrehen kann, daß weiterhin der in den Bereich des Kettenführungs-Durchgangs reichende, mit dem Aufnahme-/Führungsteil bewegungsschlüssig verbundene, im wesentlichen flache Sperrteil (11; 21, 21a; 31; 41; 51, 51a; 71; 81; 91, 91a) entweder mit seinem Stimrand (15''; 25'', 25''a; 35''; 45''; 55'', 55''a; 75''; 85'') zusammen mit dem gegenüberliegenden Abschnitt des Kettenführungs-Durchgangs eine linsenförmige Aufnahmeöffnung (10'; 20', 20'a; 30'; 30'a; 40'; 50', 50'a; 70'; 80') einschließt (Fig. 2 bis 26) oder mit seinem keilförmig ausgebildeten freien Ende in den Bereich des Kettendurchgangs reicht (Fig. 27-33).

2. Einrichtung nach Anspruch 1, dadurch gekennzeichnet, daß der Aufnahme-/Führungsteil
als flaches Blechelement (Fig. 2-20), wobei ggf. der Durchgang als Rundlochausnehmung ausgebildet ist, die einen zu einer Längsseite des Aufnahme-/Führungsteils (42) hin freien Ausgang aufweisen kann (Fig. 11-13), oder
als ebener Kreisring (Fig. 21-23), wobei der aus einem Flachmaterial ausgebildete Sperrteil (71) im wesentlichen hakenförmig mit quer zu einer Systemebene des Hakens abgebogenem Zug- und Bandsegment des Sperrteils (71) ausgebildet und der Kreisring aus einem Rundstabmaterial ausgebildet sein können, oder
als Viereckglied (Fig. 24-26), dessen einer Längenabschnitt zum restlichen Längenabschnitt rechtwinklig abgebogen ist, wobei jeder der zwei Bestandteile der Einrichtung als ein in sich geschlossenes Glied aus einem Stab, zweckmäßigerweise einem Rundstab ausgebildet sein kann, wobei der Aufnahme-/Führungsteil (82) in seinem Wesen ein Rechteckglied mit rundlaufend ausgebildeten Ecken ist, dessen einer Endbereich, der auf eine Erstreckung von etwa einem Drittel der längeren Seite des erwähnten Rechtecks begrenzt ist, in bezug auf den übrigen Teil rechtwinkelig gebogen ist, während der Sperrteil (81) im wesentlichen einem in einer Ebene befindlichen Umriß eines Buchstaben T ähnelt und Winkel und Ecken dieses Umrisses ebenso rundlaufend ausgebildet sind, und dabei eine Außenweite quer über denjenigen Teil des Umrisses, der den T-Steg betrifft, der Innenweite des gebogenen Endabschnittes des Aufnahme-Führungsteils (82) angepaßt und im zusammengesetzten Zustand in den gebogenen Bereich des Aufnahme-Führungsteils (82) eingeschoben sein kann, oder
im wesentlichen als hülsenartiges Kurzstrecken-Element im wesentlichen ovalen Querschnitts (Fig. 27-33) ausgebildet ist.

3. Einrichtung nach Anspruch 1 oder 2, dadurch gekennzeichnet, daß an ein flaches Zugsegment (13) des Sperrteils (11) in seiner Längenerstreckung im wesentlichen normal dazu ein Bandsegment (14) gleicher Breite und daran normal dazu, vom Zugsegment (13) wegweisend, ein Sperrsegment (15) angeschlossen sind, wobei das Sperrsegment (15) breiter als das Zugsegment (13) und das Bandsegment (14) sein kann und dabei das Sperrsegment (15) in der Mitte seiner Länge quer zur Längenerstreckung dachartig gebogen sein kann, wobei der Stirnrand (15'') des Sperrsegments (15) konkav gekrümmt ist und ein längs dieses Stirnrandes (15'') verlaufender Materialabschnitt (17) des Sperrsegments (15) um die Größenordnung seiner eigenen Materialstärke bogenartig eingedrückt sein kann.

4. Einrichtung nach einem der Ansprüche 1 bis 3, dadurch gekennzeichnet, daß einer zur Aufnahme des Bandsegments (14) des Sperrteils (11) vorgesehenen Ausnehmung (18) des im wesentlichen einfach plattenförmigen Aufnahme-/Führungsteils (12) der Einrichtung (10) in der Längenerstreckung der letzteren eine Rundlochausnehmung (19) in einem Abstand folgt, wobei ein längs des Stirnrandes (15'') verlaufender Materialabschnitt (17) um die Größenordnung seiner eigenmen Materialstärke bogenartig eingedrückt sein kann und ein längs der Rundlochausnehmung (19) verlaufender materieller Stirnabschnitt (12') des Aufnahme-/Führungsteils (12) in Gegenrichtung zur Krümmung des Materialabschnitts (17) des Sperrteils (11) um die Größenordnung der eigenen Materialstärke bogenartig gekrümmt sein kann und der Sperrteil (11) so in den Aufnahme-/Führungsteil (12) eingelegt sein kann, daß sich das Zugsegment (13) des Sperrteils (11) und die konkave Hohlseite des Stirnabschnitts (12') des Aufnahme-/Führungsteils (12) auf derselben Seite des letzteren befinden und sich das Sperrsegment (15) des Sperrteils (11) auf der Gegenseite des Aufnahme-/Führungsteils (12) und das Bandsegment (14) des Sperrteils (11) in der rechteckspaltartigen Ausnehmung (18) des Aufnahme-/Führungsteils (12) befinden.

5. Einrichtung nach Anspruch 1 oder 2, dadurch gekennzeichnet, daß ein Bandsegment (24; 24a) und ein Sperrsegment (25; 25a) des Sperrteils (21; 21a) gegenseitig einen Bogenteil bilden, der an ein Zugsegment (23; 23a) des Sperrteils (21; 21a) derart angeschlossen ist, daß ein Sockelteil des Bandsegments (24; 24a) einen Winkel von etwa 120° mit dem Zugsegment (23; 23a) und im wesentlichen auch mit dem Aufnahme-Führungsteil (22; 22a) einschließt, wobei eine Ausnehmung (29; 29a) des Aufnahme-/Führungsteils (22; 22a) eine Vereinigung eines im wesentlichen rechteckigen, an einen Stirnabschnitt (22'; 22'a) angrenzenden Abschnitts und eines halbkreisförmigen Abschnitts ausgebildet sein kann, der sich unterhalb des Sperrsegments (25; 25a) befindet, und dabei der Stimrand (25'') eines Stirnabschnittes (27) des Sperrteils (21) etwa {-förmig (Materialseite rechts) ausgebildet, d.h. aus zwei konkav verlaufenden Abschnitten und einer dazwischenliegenden Mittelspitze zusammengesetzt sein, und die Breite des Sperrsegments (25; 25a) in Richtung des Stirnabschnittes (27; 27a) kontinuierlich zunehmend ausgebildet sein können.

6. Einrichtung nach Anspruch 1 oder 2, dadurch gekennzeichnet, daß der Sperrteil (31) ein flaches Zugsegment (33) aufweist, das längs einer Systemachse länglich ausgeschnitten ist, wobei eine dabei vorliegende Ausnehmung (33') in Richtung zu der einen Längsseite des Zugsegments (33) hin einen freien Ausgang besitzt, so daß das mit der Ausnehmung (33') versehene Zugsegment (33) einem Haken ähnelt, wobei ein Sperrsegment (35) in seiner überwiegenden Länge in einer mit der Ebene des Zugsegments (33) parallelen Ebene angeordnet kann, wobei nur sein vorderer, oberhalb der Rundausnehmung (39) des Aufnahme-/Führungsteils (32) befindlicher Abschnitt nach vorne gegen den Aufnahme-Führungsteil (32) geneigt ausgebildet ist, während ein Stirnabschnitt (37) selbst im wesentlichen wiederum etwa parallel zum Aufnahme-/Führungsteil (32) gelegen ist, wobei sich die Breite des geneigten Vorderabschnitts in Richtung des Stirnabschnittes (37) kontinuierlich vermindern kann.

7. Einrichtung nach Anspruch 1 oder 2, dadurch gekennzeichnet, daß ein Zugsegment (53) des Sperrteils (51) gegenüber einem Blechteil ein Sonderteil und aus einem Stabmaterial, zweckmäßigerweise einem Vierkantstab ausgebildet und kettengliedförmig gekrümmt ist, wobei entweder das Zugsegment (53) als ein Kettenglied ausgebildet sein kann, das quer zu einer Systemebene der betreffenden Einrichtung verlaufend mit seiner längeren Erstreckung parallel zu der Achse der betreffenden Einrichtung ausgerichtet ist, durch eine ihm zugeordnete Ausnehmung (58) eines Bandsegments (54) eingesetzt und danach mit dem blechartigen Teil des Sperrteils (51) dauernd verbunden, zweckmäßigerweise verschweißt wird, wobei sich das Bandsegment (54) im eingebauten Zustand im Bereich nahe der Gliedeslängsmitte, vorzugsweise auf der vom Aufnahme-/Führungsteil (52) wegweisenden Hälfte des Gliedes befindet, und zur Aufnahme des Bandsegments des Sperrteils eine quadratische Ausnehmung (58) im Aufnahme-Führungsteil (52) vorgesehen ist, oder ein erster, blechartiger, und ein zweiter, kettengliedartiger Teil des Sperrteils (5 1a) so miteinander formschlüssig verbunden sein können, daß der erste Teil nach der entsprechenden Ummantelungsumformung den zweiten Teil an der Verbindungsstelle untrennbar einschließt, und dabei zwecks zusätzlicher Sicherung gegen Selbstauflösen der Einrichtung ein elastisch dehnbares Bindering (50'''a) vorgesehen sein kann, der mittels zweier seitlicher Ausschnitte (55''a) des blechartigen Teiles des Sperrteils (51a), in die er eingelegt ist, lagesicher gehalten wird.

8. Einrichtung nach Anspruch 2, dadurch gekennzeichnet, daß der hülsenartige Aufnahme-/Führungsteil (92, 92a) aus einem Blechband gefertigt ist, das seiner Längenerstreckung nach zunächst so gebogen wurde, daß es ein etwa ∩-förmiges Aussehen erhält, und danach die ∩-Schenkel über ein Längsmaß von ihren freien Enden im Ausmass von einer Hälfte, zweckmäßigerweise mehr als einer Hälfte, ihrer Länge hin mittels eines schrägen Übergangs bis zu einem gewissen Abstand einander angenähert sind, während der bogenförmige Scheitelteil der ∩-Form bogenartig eingedrückt ist,
wobei die freien Enden des Aufnahme-Führungsteils (92, 92a) über eine Breite hin, die etwa eine Hälfte oder die gesamte Breitenerstreckung des ursprünglichen Bandes umfaßt, unter einem Winkel von etwa 45° zueinander deckungsgleich zugeschnitten sein können (Fig. 27- 33).

9. Einrichtung nach Anspruch 2 oder 8, dadurch gekennzeichnet, daß der Sperrteil (91) als ein einfach flacher länglicher Teil ausgebildet ist, der an einem Ende schräg zugeschnitten ist, so daß dort ein Keil vorliegt, dessen Spitze zweckmäßigerweise abgerundet ist, und das andere Ende durch eine Abrundung, die die ganze Breite des Elements betrifft, abgeschlossen ist, und daß in der geometrischen Mitte dieser Abrundung eine Kreisrundausnehmung (93') vorgesehen ist (Fig. 27-30), oder
daß die Breite des Sperrteils (91a) in Richtung gegen das Sperrende kontinuierlich zunimmt und in diesem Sperrende eine V-Ausnehmung ausgebildet ist, so daß dort zwei in bezug auf eine Längsachse des Elements symmetrisch gestellte Keile vorliegen, wobei an dem gegenüber der V-Ausnehmung befindlichen Ende eine im wesentlichen halbkreisförmige Ausnehmung (93'a) vorgesehen ist, die so orientiert ist, daß ihre Durchmesserseite auf die Spitze desjenigen Keils ausgerichtet ist, der sich auf derjenigen Seite befindet, an der der Bogen der Ausnehmung (93'a) liegt (Fig. 31-33).

10. Einrichtung nach Anspruch 9, dadurch gekennzeichnet, daß der Sperrteil (91; 91a) zwischen die freien Enden des flachen Aufnahme-Führungsteils (92: 92a) eingesetzt und dabei so angeordnet ist, daß im Sperrzustand die schräge Seite des Keils des Sperrteils (91) bzw. die schräge Seite desjenigen der zwei Keile des Sperrteils (91a), der sich auf der Seite der Durchmesserseite der Ausnehmung (93'a) befindet, mit den Profilkanten des Aufnahme-Führungsteils (92; 92a) parallel ist, während die Schrägungskante des freien Endes des Aufnahme-Führungsteils (92; 92a) im wesentlichen durch den Drittel- bzw. Halbflächenteil der Ausnehmung (93'; 93'a) verläuft.

11. Einrichtung nach Anspruch 10, dadurch gekennzeichnet,
daß im wesentlichen im Bereich der Halbierung der Längenerstreckung des Sperrteils (91; 91a) ein Drehzapfen angeordnet ist, der den Sperr- und den Aufnahme-/ Führungsteil miteinander verbindet,
wobei der Drehzapfen im wesentlichen auf der Halbierung der Bandbreite sowohl des Sperrteils (91) als auch des Aufnahme-Führungsteils (92) angeordnet sein oder bei dem Sperrteil (91a) gegen diejenige seiner Längsseiten, die sich auf der Seite der Durchmesserseite der Ausnehmung (93'a) befindet, und bei dem Aufnahme-Führungsteil (92a) gegen diejenige seiner Längsseiten, die im Vergleich mit der anderen Seite wegen der Anwesenheit des schrägen Zuschnitts länger ist, versetzt sein kann.

12. Einrichtung nach Anspruch 10 oder 11, dadurch gekennzeichnet, daß der im Sperrzustand freie (von dem Aufnahme-/Führungsteils 92, 92a nicht abgedeckte) Anteil der Ausnehmung (93'; 93'a) durch ein Anschluß-Kettenglied (100) bzw. einen Knotenpunkt-Schäkel (lOOa) besetzt ist, das/der durch sein Aufliegen auf die schrägen Kanten des Aufnahme-Führungsteils (92; 92a) als ein Verschwenkungsbegrenzer des Sperrteils (91; 91a) dient.

13. Einrichtung nach einem der Ansprüche 1 bis 12, dadurch gekennzeichnet, daß die Aufnahmeöffnung (10'; 20'; 20'a; 30'; 40'; 50'; 50'a; 70'; 80') ihrer Größe nach derart bestimmt ist, daß ein Glied des zuziehenden Endes (5) der seitlichen Schließkette in der Stellung, in der eine flache Seite des Gliedes im wesentlichen rechtwinkelig auf die Längsachse der Einrichtung (10; 20; 20a; 30; 40; 50; 70; 80) gestellt wird, seiner kürzesten Außenerstreckung (a) nach gerade noch durch sie hindurchschlüpfen kann.
